# FASCICULE DE BREVET EUROPEEN

(11) **EP 2 891 007 B1**
(45) Date de publication et mention de la délivrance du brevet: **24.02.2021**
(21) Numéro de dépôt: 13756357.3
(22) Date de dépôt: 21.08.2013
(51) Int. Cl.: G02B 27/01

(54) **DISPOSITIF OPTIQUE COMPORTANT UN GUIDE OPTIQUE ET PROCEDE DE FABRICATION D'UN TEL DISPOSITIF**
OPTISCHE VORRICHTUNG MIT EINEM LICHTWELLENLEITER UND VERFAHREN ZUR HERSTELLUNG EINER SOLCHEN VORRICHTUNG
OPTICAL DEVICE COMPRISING AN OPTICAL WAVEGUIDE AND METHOD FOR MANUFACTURING SUCH A DEVICE

(30) Priorité: 30.08.2012 FR 1258111
(43) Date de publication de la demande: 08.07.2015
(73) Titulaire: Optinvent, 35700 Rennes (FR)
(72) Inventeur: HUGEL, Xavier, 35700 Rennes (FR); BENOIT, Pascal, 35700 Rennes (FR); DUBROCA, Guilhem, 35700 Rennes (FR); SARAYEDDINE, Khaled, 35700 Rennes (FR)
(74) Mandataire: Cabinet Le Guen Maillet
(86) Numéro de dépôt international: PCT/EP2013/067417
(87) Numéro de publication internationale: WO 2014/033035

(56) Documents cités:
- JP-A- 2005 316 304
- US-A1- 2007 064 310
- US-A1- 2009 052 047

## Description

La présente invention concerne le domaine des dispositifs optiques comportant un guide optique et un dispositif d'injection d'un faisceau lumineux dans le guide optique.

Un guide optique comporte généralement une section d'injection, par laquelle le faisceau lumineux transportant une image est introduit. Le guide optique permet au faisceau lumineux de se propager par réflexion totale interne, éventuellement grâce à un traitement spécifique des parois du guide optique. Le faisceau lumineux se propage ainsi jusqu'à une section d'extraction permettant sa sortie du guide optique. La section d'extraction peut être constituée d'un réflecteur terminant le guide optique par un plan incliné.

Pour injecter le faisceau lumineux dans le guide optique, un dispositif d'injection basé sur la mise en œuvre d'un prisme est utilisé. Ce prisme est soit moulé dans une seule et même pièce avec le guide optique, soit deux pièces séparées sont assemblées. Pour atteindre la précision requise, le moulage du prisme et du guide optique dans une seule et même pièce est onéreux et délicat à réaliser. L'ajout d'un prisme séparé est souvent privilégié, mais pose un problème d'encombrement, notamment en ce qui concerne la mise en œuvre d'un système optique complémentaire à base de lentilles permettant de générer un faisceau collimaté.

La demande de brevet publiée sous la référence US 2009/052047 A1 décrit un dispositif d'injection, dans un dispositif optique, comportant un prisme et un ensemble formé d'une lame retardatrice et d'un miroir courbe.

La demande de brevet publiée sous la référence JP 200513 16304 A décrit un dispositif optique à base de prisme dans lequel des réflexions totales internes s'opèrent.

La demande de brevet publiée sous la référenceUS 2007/0643 10 A1 décrit un autre dispositif optique comportant un prisme et un ensemble formé d'une lame retardatrice et d'un miroir courbe.

Il est souhaitable de pallier ces différents inconvénients de l'état de la technique.

Il est notamment souhaitable de fournir une solution à encombrement réduit.

Il est en outre souhaitable de fournir une solution qui soit de fabrication simple, fiable et à faible coût.

L'invention concerne un dispositif optique selon la revendication 1. Ainsi, l'encombrement du dispositif optique est réduit.

Selon un mode de réalisation particulier, le prisme comporte une face réfléchissante, le dispositif d'injection étant agencé de telle sorte qu'un faisceau lumineux réfléchi grâce au matériau polarisant en direction du miroir courbe est préalablement réfléchi par ladite face réfléchissante. Ainsi, pour un même encombrement global du dispositif optique, des éléments assurant l'injection du faisceau lumineux dans le prisme sont éloignés du champ de vision d'un utilisateur du dispositif optique. L'ergonomie est ainsi améliorée.

Selon un mode de réalisation particulier, ladite face réfléchissante forme un angle de 90° avec une face du prisme contre laquelle ledit matériau polarisant est placé. Ainsi, la fabrication du dispositif optique est simplifiée et les coûts sont réduits par rapport à l'état de la technique.

Selon un mode de réalisation particulier, le dispositif optique étant destiné à être utilisé avec une source de lumière polarisée fournissant ledit faisceau lumineux, le dispositif d'injection comporte au moins une lentille destinée à être placée entre ladite source de lumière polarisée et le prisme. Ainsi, des aberrations peuvent être corrigées.

Selon un mode de réalisation particulier, le dispositif d'injection comporte un doublet destiné à être placé entre ladite source de lumière polarisée et le prisme, le doublet étant tel qu'il comporte une face plane. Ainsi, le doublet peut être facilement collé au prisme, ce qui simplifie la fabrication du dispositif optique.

Selon un mode de réalisation particulier, le dispositif optique étant destiné à être utilisé avec une source de lumière polarisée fournissant ledit faisceau lumineux, le dispositif d'injection comporte au moins une lame demi-onde destinée à être placée entre ladite source de lumière polarisée et le prisme. Ainsi, la polarisation du faisceau lumineux peut être adaptée au matériau polarisant utilisé.

Selon un mode de réalisation particulier, le miroir courbe comporte une surface réfléchissante asphérique. Ainsi, le piqué d'une image diffusée par le guide optique est meilleur.

L'invention concerne également un procédé de fabrication selon la revendication 8. Ainsi, le procédé de fabrication permet d'obtenir un dispositif optique d'encombrement réduit.

Selon un mode de réalisation particulier, le procédé comporte les étapes suivantes : obtention d'un doublet, ayant une face plane, adapté pour corriger des aberrations chromatiques induites par le passage du faisceau lumineux depuis le miroir courbe jusqu'à une section d'extraction du guide optique ; assemblage du doublet et du prisme, ladite face plane étant placée contre le prisme. Ainsi, une image diffusée via le guide optique a un meilleur rendu.

Selon un mode de réalisation particulier, le procédé comporte les étapes suivantes : obtention d'un doublet, ayant une face plane, adapté pour corriger des aberrations chromatiques induites par le passage du faisceau lumineux depuis le miroir courbe jusqu'à une section d'extraction du guide optique ; assemblage du doublet et du prisme, une lame demi-onde étant intercalée entre ladite face plane et le prisme. Ainsi, la polarisation du faisceau lumineux peut être adaptée au matériau polarisant utilisé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un premier dispositif optique ;
- la Fig. 2 illustre schématiquement un second dispositif optique ;
- la Fig. 3 illustre schématiquement un troisième dispositif optique ;
- la Fig. 4 illustre schématiquement un quatrième dispositif optique ;
- la Fig. 5 illustre schématiquement des étapes de fabrication de tels dispositifs optiques.

Afin de réduire l'encombrement d'un dispositif optique comportant un dispositif d'injection et un guide optique, il est proposé de placer un matériau polarisant entre le dispositif d'injection et le guide optique. Le dispositif d'injection sert à injecter un faisceau lumineux dans le guide optique via le matériau polarisant. Le dispositif d'injection est basé sur la mise en œuvre d'un prisme sur lequel sont placés une lame quart d'onde et un miroir courbe, ce dernier permettant de générer un faisceau collimaté. L'agencement est tel que le faisceau lumineux injecté est réfléchi par le matériau polarisant en direction du miroir courbe qui le renvoie vers ce matériau polarisant. Comme la lame quart d'onde est traversée deux fois, le faisceau lumineux réfléchi par le miroir courbe à destination du matériau polarisant est transmis, par le matériau polarisant, dans le guide optique.

L'invention va être décrite en référence à un mode particulier de réalisation destiné à être utilisé dans un système optique de vision oculaire. L'invention peut toutefois être utilisée dans tout autre domaine mettant en œuvre de tels guides optiques, tels que des écrans intégrés dans un pare-brise d'automobile ou encore dans le cockpit d'un avion.

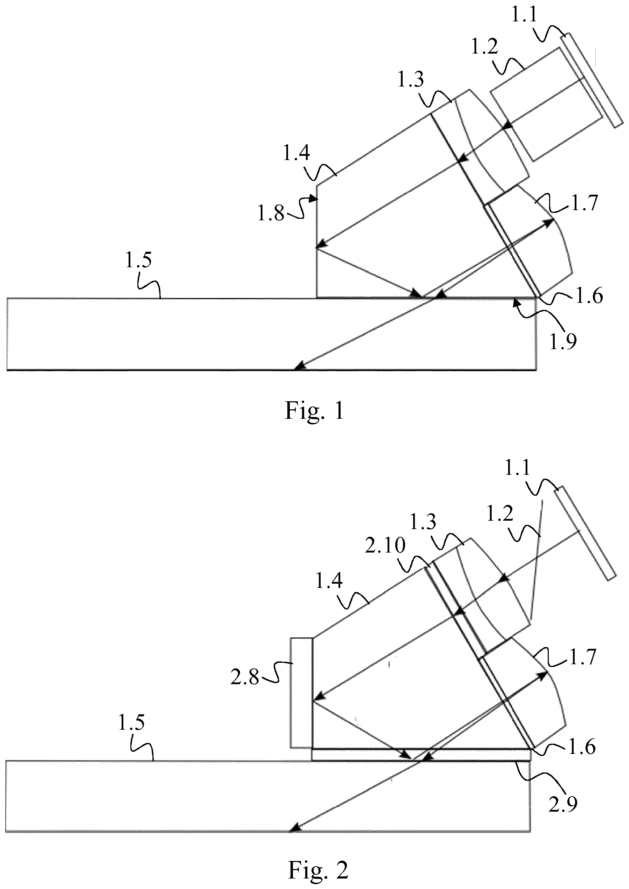

La Fig. 1 illustre schématiquement un premier dispositif optique. Le premier dispositif optique comprend un guide optique 1.5, dans un matériau transparent, adapté pour propager un faisceau lumineux par réflexions internes totales successives. Le guide optique 1.5 est par exemple une lame à faces parallèles.

Le guide optique 1.5 comporte une section d'injection sur une de ses faces parallèles à la direction de propagation du faisceau lumineux, par laquelle le faisceau lumineux est injecté. Le guide optique 1.5 comporte en outre une section d'extraction (non représentée) sur une de ses faces parallèles à la direction de propagation du faisceau lumineux, par laquelle le faisceau lumineux ressort jusqu'à l'œil d'un utilisateur. On peut se référer au brevet FR 2 925 172 B1 qui décrit un guide optique doté d'une section d'extraction constituée de microstructures réfléchissantes formées en surface du guide optique. Ces microstructures sont constituées des prismes ayant un angle permettant la sortie du faisceau lumineux du guide optique. Les microstructures sont espacées par des espaces interstitiels formés dans le prolongement de la surface du guide optique. Ces espaces interstitiels, c'est-à-dire non couverts de microstructures et prenant place entre celles-ci, sont transparents et permettent ainsi d'obtenir l'effet de vision à travers (*see-through* en anglais). Cela permet de voir l'image transportée par le faisceau lumineux, ainsi que les scènes au-delà du guide optique.

Le premier dispositif optique comporte en outre un dispositif d'injection basé sur un prisme 1.4 permettant l'injection du faisceau lumineux dans le guide optique 1.5 via la section d'injection. Le prisme 1.4 s'intercale entre une source de lumière polarisée et le guide optique 1.5. La source de lumière polarisée est par exemple obtenue grâce à une source 1.1 de type LCD (« Liquid Crystal Display » en anglais) ou LCoS (« Liquid Crystal on Silicon » en anglais), couplée à un polariseur 1.2 par séparation de faisceau (PBS pour « Polarizing Beam Splitter » en anglais). Les polariseurs par séparation de faisceau séparent un faisceau incident en deux faisceaux de polarisations différentes, en général rectilignes et perpendiculaires entre elles. Les polariseurs par séparation de faisceau ont l'avantage d'absorber très peu la lumière. Un polariseur par absorption peut toutefois être utilisé.

Le dispositif d'injection peut comporter en outre au moins une lentille intercalée entre la source de lumière polarisée et le prisme 1.4, de manière à corriger des aberrations, entre autres des aberrations chromatiques. En effet, comme détaillé par la suite, le premier dispositif d'injection comporte un miroir courbe 1.7. La longueur du chemin que doit parcourir le faisceau lumineux entre le miroir courbe 1.7 et la section d'extraction peut introduire des aberrations chromatiques, puisque l'indice de réfraction du matériau constituant le guide optique 1.5 varie en fonction de la longueur d'onde. Une alternative consiste à sélectionner un matériau pour fabriquer le prisme 1.4 qui soit adapté pour compenser ces aberrations chromatiques. Un doublet 1.3 de lentilles est préférentiellement mis en œuvre. Un tel doublet est typiquement constitué d'une lentille divergente à fort indice de réfraction et à forte dispersion, et d'une lentille convergente à faible indice de réfraction et à faible dispersion. Des lentilles diffractives pourraient aussi être utilisées.

La lumière polarisée est donc ainsi injectée dans le prisme 1.4, et la lumière polarisée vient frapper une face réfléchissante 1.8 du prisme 1.4, cette face réfléchissante 1.8 étant opposée à celle par laquelle la lumière polarisée est injectée. En ce qui concerne le premier dispositif optique, la face réfléchissante 1.8 est réalisée par dépôt métallique, par exemple d'aluminium, ce qui permet d'obtenir un effet réfléchissant avec un encombrement réduit.

Le premier guide optique est en outre adapté de telle sorte que le prisme 1.4 et le guide optique 1.5 sont séparés d'un matériau polarisant 1.9 au niveau de la section d'injection. En ce qui concerne le premier dispositif optique, la mise en œuvre du matériau polarisant 1.9 est réalisée par dépôt de couches minces formant une surface séparant deux états de polarisation. Des fils métalliques de faible diamètre, de l'ordre de 200 nm, peuvent aussi être utilisés pour former un polariseur à grille. Ces deux approches permettent d'obtenir un effet polarisant avec un encombrement réduit.

Le matériau polarisant 1.9 est tel qu'il réfléchit tout faisceau lumineux dont l'état de polarisation est celui du faisceau lumineux réfléchi par la face réfléchissante 1.8, c'est-à-dire celui du faisceau lumineux injecté dans le prisme 1.4 dans le cadre du premier dispositif optique. Le matériau polarisant 1.9 est en outre tel qu'il est traversé par tout faisceau lumineux dans un autre état de polarisation.

Le dispositif d'injection comporte en outre sur une face opposée à la face réfléchissante 1.8 une lame à retard 1.6 de type quart d'onde. Une lame à retard est un élément matériel optique capable de modifier la polarisation d'un rayon lumineux la traversant. Contrairement à un polariseur, l'état de polarisation de la lumière à la sortie de la lame à retard dépend de l'état à l'entrée. Cet effet vient de la biréfringence du cristal, souvent du quartz ou du spath d'Islande, dans lequel est faite la lame. Des films polymères étirés, ou un cristal liquide dont les molécules ont été orientées, peuvent aussi être utilisés, de manière à faciliter le collage sur le prisme 1.4 et le guide optique 1.5 et/ou à réduire les coûts de fabrication. Considérant que la polarisation d'un faisceau lumineux peut être représentée selon deux composantes, une lame à retard permet de retarder une de ces deux composantes par rapport à l'autre, c'est-à-dire de provoquer un déphasage. Les lames à retard les plus courantes sont les lames demi-onde et les lames quart d'onde. Les lames demi-onde, souvent notées lames *λ*/*2*, créent un retard d'une moitié de longueur d'onde. Elles permettent de changer la direction d'une polarisation linéaire. Les lames quart d'onde, souvent notées lames *λ*/*4*, créent un retard d'un quart de longueur d'onde. Les lames quart d'onde permettent de passer d'une polarisation rectiligne à une polarisation circulaire, et vice versa.

Le dispositif d'injection comporte en outre, en association avec la lame quart d'onde 1.6, le miroir courbe 1.7 déjà mentionné. La surface réfléchissante du miroir courbe 1.7 est préférentiellement asphérique, pour obtenir un bon piqué d'image.

Le faisceau lumineux en provenance de la face réfléchissante 1.8 du prisme 1.4 est réfléchi par la face du prisme 1.4 où est placé le matériau polarisant 1.9. Le faisceau lumineux traverse alors la lame quart d'onde 1.6 et vient se réfléchir sur le miroir courbe 1.7, puis retraverse la lame quart d'onde 1.6. La lame quart d'onde 1.6 étant traversée deux fois, le même effet qu'une lame demi-onde est obtenu. L'état de polarisation du faisceau lumineux passe alors d'un état où le faisceau est réfléchi par la face du prisme 1.4 contre laquelle est placé le matériau polarisant 1.9 à un état où le faisceau traverse le matériau polarisant. Après avoir traversé pour la deuxième fois la lame quart d'onde 1.6, le faisceau lumineux traverse donc la face du prisme 1.4 où est placé le matériau polarisant 1.9 et est ainsi injecté dans le guide optique 1.5. Le faisceau lumineux se propage ensuite par réflexions internes totales successives jusqu'à la section d'extraction.

Préférentiellement, la face réfléchissante 1.8 du prisme 1.4 forme un angle de 90° avec celle où est placé le matériau polarisant 1.9, ce qui permet que, sur une même face, se fasse l'injection de la lumière dans le prisme 1.4 et soit placé l'ensemble formé par la lame quart d'onde 1.6 et le miroir courbe 1.7. La face où se fait l'injection de la lumière et où est placé l'ensemble formé par la lame quart d'onde 1.6 et le miroir courbe 1.7 forme un angle aigu avec la face où est placé le matériau polarisant. Un angle différent de 90° entre la face réfléchissante 1.8 et celle où est placé le matériau polarisant 1.9 implique un prisme de section de forme pentagonale, l'injection de la lumière dans le prisme et l'ensemble formé par la lame quart d'onde 1.6 et le miroir courbe 1.7 étant alors placés, du même côté du prisme, mais sur des faces différentes. La fabrication du prisme, lorsqu'il est à section quadrilatérale, s'en trouve alors facilitée.

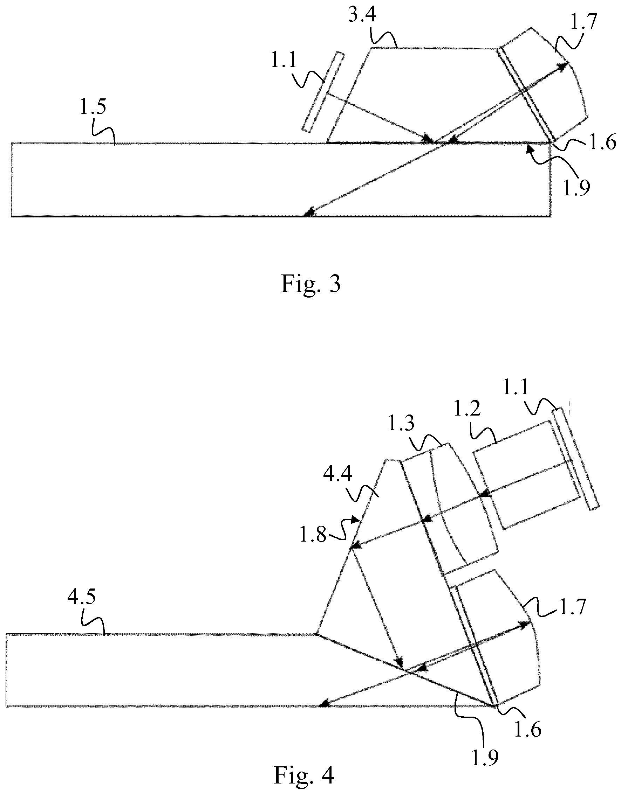

Il convient de noter, que comme présenté à la Fig. 4, la section d'injection peut être non parallèle à la direction de propagation du faisceau lumineux dans le guide optique. Le guide optique, noté 4.5 sur la Fig. 4, a alors une forme telle que son épaisseur diminue linéairement au niveau de la zone d'injection par rapport au reste du guide optique 4.5, l'épaisseur du guide optique 4.5 étant ainsi plus importante en direction de la zone d'extraction. La forme du prisme, noté 4.4 sur la Fig. 4 est alors adaptée en conséquence, les autres éléments restant identiques.

La Fig. 2 illustre schématiquement un second dispositif optique. Le second dispositif optique reprend en substance les éléments du premier dispositif décrit en relation avec la Fig. 1. La face réfléchissante du prisme 1.4 y est cependant réalisée par collage ou assemblage d'un miroir plan 2.8 sur cette face, et le matériau polarisant y est réalisé par collage d'une lame polarisante 2.9 telle qu'elle réfléchit tout faisceau lumineux dont l'état de polarisation est celui du faisceau lumineux réfléchi par la face réfléchissante du prisme 1.4 et telle qu'elle est traversée par tout faisceau lumineux dans un autre état de polarisation.

Le dispositif d'injection du second dispositif optique comporte en outre une lame demi-onde 2.10 entre le doublet 1.3 et le prisme 1.4. Cela permet de mettre le faisceau lumineux dans l'état de polarisation dans lequel le faisceau lumineux doit être pour être réfléchi par la lame polarisante 2.9, lorsque le faisceau lumineux n'est pas dans cet état de polarisation en sortie du polariseur 1.2. La lame demi-onde 2.10 peut aussi être placée 10 entre le doublet 1.3 et le polarisateur 1.2. L'agencement de la Fig. 2 permet de faciliter la réalisation du second dispositif optique en mettant en œuvre un doublet avec une face plane contre laquelle est collée la lame demi-onde 2.10, qui elle-même est collée sur le prisme 1.4. On évite ainsi la présence d'éléments mécaniques pour assurer l'assemblage. Il convient de noter que cette forme du doublet 1.3 permet aussi de le coller directement sur le prisme, comme présenté sur la Fig. 1.

La Fig. 3 illustre schématiquement un troisième dispositif optique, permettant de se passer de la face réfléchissante du prisme 1.4. Le faisceau lumineux est alors injecté via une face d'un prisme 3.4, opposée à celle où sont placés la lame quart d'onde 1.6 et le miroir courbe 1.7. Le faisceau lumineux est alors injecté en direction du matériau polarisant 1.9 qui le réfléchit en direction de la lame quart d'onde 1.6 et du miroir courbe 1.7.

La forme du prisme 3.4 diffère de celle du prisme 1.4 en ce que la face du prisme 3.4 forme un angle aigu avec la face où est placé le matériau polarisant, cet angle aigu étant substantiellement égal à celui que forme la face où sont placés la lame quart d'onde 1.6 et le miroir courbe 1.7 avec la face où est placé le matériau polarisant 1.9.

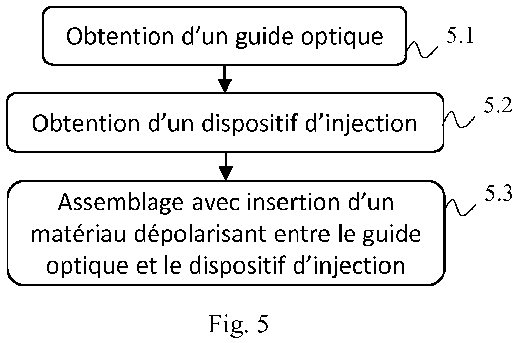

La Fig. 5 illustre schématiquement des étapes de fabrication de tels dispositifs optiques.

Dans une étape 5.1, le guide optique 1.5, 4.5, est obtenu, par exemple par moulage.

Dans une étape 5.2, un dispositif d'injection est obtenu. Le dispositif d'injection comporte au minimum un prisme sur lequel sont collés la lame quart d'onde 1.6 et le miroir courbe 1.7. La forme du prisme est dans ce cas celle du prisme 3.4. En variante, la lame quart d'onde 1.6 et le miroir courbe 1.7 sont assemblés mécaniquement sur le prisme ou tout autre élément solidaire avec le prisme.

Dans une variante, un miroir est positionné sur le prisme, sur une face opposée à celle où est placé l'ensemble formé par la lame quart d'onde 1.6 et le miroir courbe 1.7 et où le faisceau lumineux est destiné à être injecté. La forme du prisme est dans ce cas celle du prisme 1.4 ou 4.4. Ce miroir peut être obtenu par dépôt ou par collage d'une lame, comme déjà mentionné en relation avec les Figs. 1 et 2.

Dans une autre variante, le doublet 1.3 est assemblé au prisme. Le doublet 1.3 comportant préférentiellement une face plane, perpendiculaire à l'axe de parcours du faisceau lumineux, il est collé sur le prisme.

Dans une autre variante, l'ensemble formé par le doublet 1.3 et la lame demi-onde 2.10 est assemblé au prisme. Le doublet 1.3 comportant préférentiellement une face plane, perpendiculaire à l'axe de parcours du faisceau lumineux, il est collé sur la lame demi-onde 2.10 et la lame demi-onde 2.10 est collée au prisme.

Dans une étape 5.3 suivante, le dispositif d'injection est assemblé au guide optique 1.5, avec insertion d'un matériau polarisant entre le guide optique 1.5 et le dispositif d'injection, le matériau polarisant étant tel que précédemment décrit. L'assemblage peut être réalisé par dépôt du matériau polarisant, par la mise en place de fils métalliques afin de former un polariseur de grille ou d'une lame polarisation.

## Revendications

1. Dispositif optique comportant un guide optique (1.5 ; 4.5) adapté pour propager un faisceau lumineux par réflexions internes totales successives et un dispositif d'injection adapté pour injecter le faisceau lumineux dans le guide optique via une section d'injection dudit guide optique, ladite section d'injection étant située sur une des faces de ce guide optique,
le dispositif d'injection comportant un prisme (1.4 ; 3.4 ; 4.4) et un ensemble formé d'une lame quart d'onde (1.6) et d'un miroir courbe (1.7), le dispositif d'injection étant agencé de telle sorte qu'un faisceau lumineux réfléchi dans le prisme grâce à un matériau polarisant en direction du miroir courbe traverse la lame quart d'onde, est ensuite réfléchi par le miroir courbe en direction du matériau polarisant et retraverse la lame quart d'onde, **caractérisé en ce que** le matériau polarisant (1.9) est présent entre le guide optique et le prisme du dispositif d'injection au niveau de la section d'injection de telle sorte que le matériau polarisant est situé sur ladite section d'injection du guide optique et sur une face du prisme du dispositif d'injection.

2. Dispositif optique selon la revendication 1, **caractérisé en ce que** le prisme comporte une face réfléchissante (1.8), le dispositif d'injection étant agencé de telle sorte qu'un faisceau lumineux réfléchi grâce au matériau polarisant en direction du miroir courbe est préalablement réfléchi par ladite face réfléchissante.

3. Dispositif optique selon la revendication 2, **caractérisé en ce que** ladite face réfléchissante forme un angle de 90° avec une face du prisme contre laquelle ledit matériau polarisant est placé.

4. Dispositif optique selon l'une quelconque des revendications 1 à 3, **caractérisé en ce que**, le dispositif optique étant destiné à être utilisé avec une source de lumière polarisée fournissant ledit faisceau lumineux, le dispositif d'injection comporte au moins une lentille destinée à être placée entre ladite source de lumière polarisée et le prisme.

5. Dispositif optique selon la revendication 4, **caractérisé en ce que** le dispositif d'injection comporte un doublet (1.3) destiné à être placé entre ladite source de lumière polarisée et le prisme, le doublet étant tel qu'il comporte une face plane.

6. Dispositif optique selon l'une quelconque des revendications 1 à 5, **caractérisé en ce que**, le dispositif optique étant destiné à être utilisé avec une source de lumière polarisée fournissant ledit faisceau lumineux, le dispositif d'injection comporte au moins une lame demi-onde (2.10) destinée à être placée entre ladite source de lumière polarisée et le prisme.

7. Dispositif optique selon l'une quelconque des revendications 1 à 6, **caractérisé en ce que** le miroir courbe comporte une surface réfléchissante asphérique.

8. Procédé de fabrication d'un dispositif optique comportant les étapes suivantes :
- obtention (5.1) d'un guide optique adapté pour propager un faisceau lumineux par réflexions internes totales successives ;
- obtention (5.2) d'un dispositif d'injection comportant un prisme et un ensemble formé d'une lame quart d'onde et d'un miroir courbe, le dispositif d'injection étant destiné à injecter le faisceau lumineux dans le guide optique via une section d'injection dudit guide optique, ladite section d'injection étant située sur une face de ce guide optique ;
**caractérisé en ce qu'**il comporte en outre l'étape suivante :
- assemblage (5.3) du dispositif d'injection et du guide optique avec placement d'un matériau polarisant entre le guide optique et le prisme du dispositif d'injection au niveau de la section d'injection, l'assemblage étant tel qu'un faisceau lumineux réfléchi dans le prisme grâce au matériau polarisant en direction du miroir courbe traverse la lame quart d'onde, est ensuite réfléchi par le miroir courbe en direction du matériau polarisant et retraverse la lame quart d'onde et l'assemblage étant tel que le matériau polarisant est situé sur ladite section d'injection dudit guide optique et sur une face du prisme du dispositif d'injection.

9. Procédé de fabrication selon la revendication 8, **caractérisé en ce qu'**il comporte les étapes suivantes :
- obtention d'un doublet, ayant une face plane, adapté pour corriger des aberrations chromatiques induites par le passage du faisceau lumineux depuis le miroir courbe jusqu'à une section d'extraction du guide optique ;
- assemblage du doublet et du prisme, ladite face plane étant placée contre le prisme.

10. Procédé de fabrication selon la revendication 8, **caractérisé en ce qu'**il comporte les étapes suivantes :
- obtention d'un doublet, ayant une face plane, adapté pour corriger des aberrations chromatiques induites par le passage du faisceau lumineux depuis le miroir courbe jusqu'à une section d'extraction du guide optique ;
- assemblage du doublet et du prisme, une lame demi-onde étant intercalée entre ladite face plane et le prisme.

## Patentansprüche

1. Optische Vorrichtung, die einen Lichtleiter (1.5; 4.5), der geeignet ist, einen Lichtstrahl durch aufeinanderfolgende innere Totalreflexionen auszubreiten, und eine Einkopplungsvorrichtung aufweist, die geeignet ist, den Lichtstrahl in den Lichtleiter über einen Einkopplungsabschnitt des Lichtleiters einzukoppeln, wobei der Einkopplungsabschnitt sich auf einer der Seiten dieses Lichtleiters befindet,
wobei die Einkopplungsvorrichtung ein Prisma (1.4; 3.4; 4.4) und eine von einem Viertelwellenplättchen (1.6) und einem gekrümmten Spiegel (1.7) gebildete Einheit aufweist, wobei die Einkopplungsvorrichtung so eingerichtet ist, dass ein im Prisma dank eines in Richtung des gekrümmten Spiegels polarisierenden Materials reflektierter Lichtstrahl das Viertelwellenplättchen durchquert, anschließend vom gekrümmten Spiegel in Richtung des polarisierenden Materials reflektiert wird und das Viertelwellenplättchen wieder durchquert, **dadurch gekennzeichnet, dass** das polarisierende Material (1.9) zwischen dem Lichtleiter und dem Prisma der Einkopplungsvorrichtung im Bereich des Einkopplungsabschnitts vorhanden ist, so dass das polarisierende Material sich auf dem Einkopplungsabschnitt des Lichtleiters und auf einer Seite des Prismas der Einkopplungsvorrichtung befindet.

2. Optische Vorrichtung nach Anspruch 1, **dadurch gekennzeichnet, dass** das Prisma eine reflektierende Seite (1.8) aufweist, wobei die Einkopplungsvorrichtung so eingerichtet ist, dass ein dank des polarisierenden Materials in Richtung des gekrümmten Spiegels reflektierter Lichtstrahl vorher von der reflektierenden Seite reflektiert wird.

3. Optische Vorrichtung nach Anspruch 2, **dadurch gekennzeichnet, dass** die reflektierende Seite einen Winkel von 90° mit einer Seite des Prismas bildet, gegen die das polarisierende Material platziert wird.

4. Optische Vorrichtung nach einem der Ansprüche 1 bis 3, **dadurch gekennzeichnet, dass**, da die optische Vorrichtung dazu bestimmt ist, mit einer den Lichtstrahl liefernden Quelle polarisierten Lichts verwendet zu werden, die Einkopplungsvorrichtung mindestens eine Linse aufweist, die dazu bestimmt ist, zwischen der Quelle polarisierten Lichts und dem Prisma platziert zu werden.

5. Optische Vorrichtung nach Anspruch 4, **dadurch gekennzeichnet, dass** die Einkopplungsvorrichtung eine Doppellinse (1.3) aufweist, die dazu bestimmt ist, zwischen der Quelle polarisierten Lichts und dem Prisma angeordnet zu werden, wobei die Doppellinse so ist, dass sie eine ebene Seite aufweist.

6. Optische Vorrichtung nach einem der Ansprüche 1 bis 5, **dadurch gekennzeichnet, dass**, da die optische Vorrichtung dazu bestimmt ist, mit einer den Lichtstrahl liefernden Quelle polarisierten Lichts verwendet zu werden, die Einkopplungsvorrichtung mindestens ein Halbwellenplättchen (2.10) aufweist, das dazu bestimmt ist, zwischen der Quelle polarisierten Lichts und dem Prisma angeordnet zu werden.

7. Optische Vorrichtung nach einem der Ansprüche 1 bis 6, **dadurch gekennzeichnet, dass** der gekrümmte Spiegel eine asphärische reflektierende Fläche aufweist.

8. Verfahren zur Herstellung einer optischen Vorrichtung, das die folgenden Schritte aufweist:
- Erhalt (5.1) eines Lichtleiters, der geeignet ist, einen Lichtstrahl durch aufeinanderfolgende innere Totalreflexionen auszubreiten;
- Erhalt (5.2) einer Einkopplungsvorrichtung, die ein Prisma und eine von einem Viertelwellenplättchen und von einem gekrümmten Spiegel gebildete Einheit aufweist, wobei die Einkopplungsvorrichtung dazu bestimmt ist, den Lichtstrahl in den Lichtleiter über einen Einkopplungsabschnitt des Lichtleiters einzukoppeln, wobei der Einkopplungsabschnitt sich auf einer Seite dieses Lichtleiters befindet;
**dadurch gekennzeichnet, dass** es außerdem den folgenden Schritt aufweist:
- Zusammenbau (5.3) der Einkopplungsvorrichtung und des Lichtleiters mit Platzierung eines polarisierenden Materials zwischen dem Lichtleiter und dem Prisma der Einkopplungsvorrichtung im Bereich des Einkopplungsabschnitts, wobei der Zusammenbau so ist, dass ein im Prisma dank des polarisierenden Materials in Richtung des gekrümmten Spiegels reflektierter Lichtstrahl das Viertelwellenplättchen durchquert, anschließend vom gekrümmten Spiegel in Richtung des polarisierenden Materials reflektiert wird und das Viertelwellenplättchen wieder durchquert, und der Zusammenbau so ist, dass das polarisierende Material sich auf dem Einkopplungsabschnitt des Lichtleiters und auf einer Seite des Prismas der Einkopplungsvorrichtung befindet.

9. Herstellungsverfahren nach Anspruch 8, **dadurch gekennzeichnet, dass** es die folgenden Schritte aufweist:
- Erhalt einer Doppellinse, die eine ebene Seite hat, geeignet, um durch den Durchgang des Lichtstrahls vom gekrümmten Spiegel bis zu einem Auskopplungsabschnitt des Lichtleiters induzierte chromatische Aberrationen zu korrigieren;
- Zusammenbau der Doppellinse und des Prismas, wobei die ebene Seite gegen das Prisma platziert wird.

10. Herstellungsverfahren nach Anspruch 8, **dadurch gekennzeichnet, dass** es die folgenden Schritte aufweist:
- Erhalt einer Doppellinse, die eine ebene Seite hat, geeignet, um durch den Durchgang des Lichtstrahls vom gekrümmten Spiegel bis zum Auskopplungsabschnitt des Lichtleiters induzierte chromatische Aberrationen zu korrigieren;
- Zusammenbau der Doppellinse und des Prismas, wobei ein Halbwellenplättchen zwischen die ebene Seite und das Prisma eingefügt wird.

## Claims

1. Optical device comprising an optical guide (1.5; 4.5) adapted for propagating a light beam by successive total internal reflections and an injection device adapted for injecting the light beam into the optical guide via an injection section of said optical guide, said injection section being located on one of the faces of this optical guide,
the injection device comprising a prism (1.4; 3.4; 4.4) and a set formed by a quarter-wave plate (1.6) and a curved mirror (1.7), the injection device being arranged in such a way that a light beam reflected in the prism by a polarising material in the direction of the curved mirror passes through the quarter-wave plate and is then reflected by the curved mirror in the direction of the polarising material and passes through the quarter-wave plate again,
**characterised in that** the polarising material (1.9) is present between the optical guide and the prism of the injection device at the injection section in such a way that the polarizing material is located on said injection section of the optical guide and on a face of the prism of the injection device.

2. Optical device according to claim 1, **characterised in that** the prism comprises a reflective face (1.8), the injection device being arranged in such a way that a light beam reflected by the polarising material in the direction of the curved mirror is previously reflected by said reflective face.

3. Optical device according to claim 2, **characterised in that** said reflective face forms an angle of 90° with a face of the prism against which said polarising material is placed.

4. Optical device according to any one of claims 1 to 3, **characterised in that**, the optical device being intended to be used with a polarised light source supplying said light beam, the injection device comprises at least one lens intended to be placed between said polarised light source and the prism.

5. Optical device according to claim 4, **characterised in that** the injection device comprises a doublet (1.3) intended to be placed between said polarised light source and the prism, the doublet being such it comprises a flat face.

6. Optical device according to any one of claims 1 to 5, **characterised in that**, the optical device being intended to be used with a polarised light source supplying said light beam, the injection device comprises at least one half-wave plate (2.10) intended to be placed between said polarised light source and the prism.

7. Optical device according to any one of claims 1 to 6, **characterised in that** the curved mirror comprises an aspheric reflective surface.

8. Method for manufacturing an optical device comprising the following steps:
- obtaining (5.1) an optical guide suitable for propagating a light beam by successive total internal reflections;
- obtaining (5.2) an injection device comprising a prism and an assembly formed by a quarter-wave plate and a curved mirror, the injection device being intended to inject the light beam into the optical guide via an injection section of said optical guide, said injection section being located on one of the faces of this optical guide;
**characterised in that** it further comprises the following step:
- assembling (5.3) the injection device and the optical guide with placement of a polarising material between the optical guide and the prism of the injection device at the injection section, the assembly being such that a light beam reflected in the prism by means of the polarising material in the direction of the curved mirror passes through the quarter-wave plate and is then reflected by the curved mirror in the direction of the polarising material and passes through the quarter-wave plate again, and assembling is such that the polarizing material is located on said injection section of the optical guide and on a face of the prism of the injection device.

9. Manufacturing method according to claim 8, **characterised in that** it comprises the following steps:
- obtaining a doublet with a flat face, adapted for correcting chromatic aberrations caused by the passage of the light beam from the curved mirror to an extraction section of the optical guide;
- assembling the doublet and prism, said flat face being placed against the prism.

10. Manufacturing method according to claim 8, **characterised in that** it comprises the following steps:
- obtaining a doublet with a flat face, adapted for correcting chromatic aberrations caused by the passage of the light beam from the curved mirror to an extraction section of the optical guide;
- assembling the doublet and prism, a half-wave plate being interposed between said flat face and the prism.
